# EUROPÄISCHE PATENTSCHRIFT

(11) **EP 3 546 896 B1**
(45) Veröffentlichungstag und Bekanntmachung des Hinweises auf die Patenterteilung: **26.05.2021**
(21) Anmeldenummer: 19161818.0
(22) Anmeldetag: 11.03.2019
(51) Int. Cl.: G01D 11/24, G01P 1/02, G01P 1/12, G01P 3/481, G09F 3/03

(54) **PLOMBE FÜR EINEN IMPULSGEBER**
SEAL FOR A PULSE GENERATOR
PLOMB POUR UN ÉMETTEUR D'IMPULSIONS

(30) Priorität: 28.03.2018 DE 202018101751 U; 30.05.2018 DE 202018103049 U
(43) Veröffentlichungstag der Anmeldung: 02.10.2019
(73) Patentinhaber: TE Connectivity KISSLING Products GmbH, 72218 Wildberg (DE)
(72) Erfinder: Reichert, Volker, 01705 Freital (DE); Höhn, Roland, 72348 Rosenfeld (DE)
(74) Vertreter: Grünecker Patent- und Rechtsanwälte PartG mbB

(56) Entgegenhaltungen:
- DE-A1-102008 025 067
- DE-B3-102006 061 644
- DE-U1- 29 721 694
- DE-U1- 29 911 835
- DE-U1-202018 101 395
- FR-A1- 2 986 782

## Beschreibung

Die Erfindung betrifft eine Plombe für einen Impulsgeber, der ein Schutzgehäuse für eine Sensoreinrichtung aufweist, wobei das Schutzgehäuse einen Mehrkantabschnitt und einen Gewindeabschnitt zum Einschrauben des Schutzgehäuses in ein Getriebegehäuse eines Fahrzeugs aufweist und wobei am dem Gewindeabschnitt abgewandten Ende des Schutzgehäuses ein Steckerbuchsengehäuse der Sensoreinrichtung aus dem Schutzgehäuse herausragt.

Gewerblich genutzte LKW und Busse müssen aufgrund gesetzlicher Vorschriften mit Tachographen ausgerüstet sein. Die Tachographen arbeiten mit Drehimpulsgebern zur Erfassung der Geschwindigkeit und der gefahrenen Wegstrecke des Fahrzeugs zusammen, wobei die Tachographen über mit einem Stecker versehene Kabel mit den Impufsgebern verbunden sind.

Bei Tachographen besteht die Gefahr, dass die Messwerte manipuliert werden, indem beispielsweise Ruhezeiten vorgetäuscht werden oder eine niedrigere Geschwindigkeit als die tatsächlich gefahrene angegeben wird.

Es sind daher schon verschiedene Plombiervorrichtungen für Impulsgeber vorgeschlagen worden. Die DE 20 2018 101 395 U1 beschreibt beispielsweise eine Manipulationsschutzvorrichtung, die aus zwei Teilen besteht, wobei die beiden Teile mittels einer Formschlussverbindung unlösbar miteinander verbunden sind, wenn die Mänipulationsschutzvorrichtung auf einen Impulsgeber aufgesetzt wird. Diese unlösbare Verbindung der beiden Teile lässt sich nur unter Zerstörung der Manipulationsschutzvorrichtung wieder lösen.

Sowohl für die Herstellung als auch die Montage der Manipulationsschutzvorrichtung wäre jedoch eine einteilige Ausbildung vorteilhafter.

FR2986782A1 betrifft eine Vorrichtung zum Verriegeln der Kappe an einem Behälter mit einem Kragen, umfassend eine Kappe, die mit mindestens einer inneren Nut versehen ist und so geformt ist, dass sie die Kappe bedeckt und den Kragen umgibt, so dass die Kappe unzugänglich ist, wobei ein Ring in der Kappe untergebracht sein kann und mit unteren inneren Einkerbungen versehen ist, die dazu bestimmt sind, unter den Kragen zu gelangen, um den Ring am Behälter zu befestigen, und äußeren Einkerbungen, die mit der Nut zusammenwirken können, um den Ring an der Kappe zu befestigen.

DE102008025067A1 sich auf eine Plombenanordnung für einen Drehwertgeber mit einem mit einem im Wesentlichen stabförmigen Schutzgehäuse, an welchem für ein Anbringen des Drehwertgebers am Getriebegehäuse eines Fahrzeuges eine Flanschfläche und Schraubverbindungsmittel ausgebildet sind.

DE102006061644B3 bezieht sich auf einen Impulsgeber mit einer Plombiervorrichtung, wobei der zylinderartig ausgebildete Impulsgeber an seinem einen Ende ein Gewinde zum Einschrauben in eine Gewindebohrung eines Wandelements bis zur Anlage mit einer Flanschfläche an dem Wandelement aufweist.

DE29721694U1 betrifft eine Plombiervorrichtung für einen Drehwertgeber mit einem mit einer Anflanschfläche versehenen, im wesentlichen zylindrischen Schutzgehäuse und einem in axialer Richtung an dem Schutzgehäuse unlösbar befestigten Steckersockel, an welchem ein dem Drehwertgeber zugeordnetes und mit einem Stecker versehenes Kabel mittels einer Überwurfmutter lösbar befestigbar ist.

DE29911835U1 betrifft eine Plombe für einen Drehwertgeber mit einem im Wesentlichen stabförmigen Schutzgehäuse, an welchem für ein Anbringen des Drehwertgebers am Getriebegehäuse eines Fahrzeuges eine Flanschfläche und Schraubverbindungsmittel ausgebildet sind, wobei die Flanschfläche das Schutzgehäuse in einen Sensorabschnitt und einen Sockelabschnitt teilt und der Sockelabschnitt mit einem dem Ansetzen eines Schraubwerkzeuges dienenden, gegenüber der Flanschfläche abgesetzten Sechskant versehen ist.

Der vorliegenden Erfindung liegt daher die Aufgabe zugrunde, eine einteilig herstellbare Plombe für einen Impulsgeber zu schaffen, die ebenfalls nicht zerstörungsfrel wieder entfernt werden kann.

Gelöst wird diese Aufgabe durch den Gegenstand des unabhängigen Patentanspruchs gelöst. Vorteilhafte Weiterbildungen sind Gegenstand der abhängigen Patentansprüche.

Entsprechend wird die Aufgabe gelöst durch eine Plombiervorrichtung für einen Impulsgeber, umfassend eine Plombe und ein Schutzgenäuse für eine Sensoreinrichtung des Impulsgebers, wobei das Schutzgehäuse einen Mehrkantabschnitt und einen Gewindeabschnitt zum Einschrauben des Schutzgehäuses in ein Getriebegehäuse eines Fahrzeugs aufweist und wobei am dem Gewindeabschnitt abgewandten Ende des Schutzgehäuses ein Steckerbuchsengehäuse der Sensoreinrichtung aus dem Schutzgehäuse herausragt, wobei die Plombiervorrichtung dadurch gekennzeichnet ist, dass sie eine auf das Schutzgehäuse mit dem Mehrkantabschnitt aufsetzbare einteilige Hülse aufweist, wobei die Hülse an ihrem dem Gewindeabschnitt zugewandten Ende auf ihrer Innenseite mit mehreren, schräg radial nach innen vorstehenden Rastzungen versehen ist, die nach Aufsetzen der Hülse auf das Schutzgehäuse den Mehrkantabschnitt untergreifen, und wobei die Hülse an ihrem gegenüberliegendem Ende mit einem radial nach innen gerichteten Bund versehen ist, der nach Aufsetzen der Hülse auf den Impulsgeber den oberen Rand des Schutzgehäuses übergreift.

Die Rastzungen verhindern, dass die Plombe vom Impulsgeber abgezogen werden kann, ohne diese Rastzungen zu zerstören. Die Hülse der Plombe deckt außerdem den Mehrkantabschnitt ab, sodass auch der gesamte Impulsgeber nicht aus dem Getriebegehäuse herausgeschraubt werden kann. Der an der Hülse vorgesehene, radial nach innen vorstehende Bund verhindert ein Herausziehen des Steckerbuchsengehäuses zusammen mit der daran befestigten Sensoreinrichtung aus dem Schutzgehäuse. Nach dem Aufsetzen der Plombe auf das Schutzgehäuse des Impulsgebers sind somit alle Manipulationsmöglichkeiten am Impulsgeber ausgeschlossen. Der nach innen vorstehende Bund kann dabei entweder direkt an die Hülse angeformt sein, oder er kann von radial nach innen abgewinkelten Enden mehrerer, sich axial erstreckender, den oberen Rand der Hülse bildenden Federzungen gebildet sein. Das Vorsehen von Federzungen am oberen Rand der Hülse hat den Vorteil, dass die Plombe selbst bei einer aufgesetzten Schutzkappe für das Steckerbuchsengehäuse auf das Schutzgehäuse aufgeschoben werden kann. Die Federzungen werden dabei nach außen gedrückt und schnappen unterhalb der Schutzkappe wieder zurück und können dadurch das Herausziehen des Steckerbuchsengehäuses zusammen mit der Sensoreinrichtung zuverlässig verhindern.

Dabei können diese Federzungen über den Umfang der Hülse versetzt zu den Rastzungen angeordnet sein. Durch dieses Versetzen lässt sich die Plombe leichter entformen, wenn sie als einteiliges Kunststoffspritzgießteil hergestellt wird.

Bei einer alternativen Ausführungsform der Plombe weist die Hülse an ihrem Ende mit dem radial nach innen gerichteten Bund eine über das Schutzgehäuse des Sensors hinaus ragende Verlängerung auf, die eine kabelseitige Steckeranordnung übergreift, die mit dem aus dem Schutzgehäuse herausragenden Steckerbuchsengehäuse verbunden ist. In diesem Fall wird zuerst das Steckerkabel mit dem Sensor via Buchsengehäuse verbunden und dann die Hülse über das Kabel auf die Kabelanordnung und den Sensor geschoben.

Weitere Vorteile ergeben sich, wenn die Hülse einen kreiszylindrischen Innenquerschnitt aufweist und auf dem Schutzgehäuse frei drehbar ist. Auf diese Weise kann die Plombe einfach auf das Schutzgehäuse des Impulsgebers aufgesetzt werden, ohne bestimmte Winkelpositionen aufgrund des Mehrkantabschnitts des Schutzgehäuses beachten zu müssen.

Bei einer bevorzugten Ausgestaltung weist außerdem der obere Abschnitt der Hülse einen geringeren Durchmesser auf und der Übergangsbereich zwischen dem oberen und dem unteren Abschnitt liegt auf dem oberen Ringrand des Mehrkantabschnitts auf. Durch diese Ausgestaltung ist die Plombe gegen ein axiales Verschieben in Richtung auf das Getriebegehäuse zusätzlich gesichert. Eine weitere axiale Sicherung stellt der radial nach innen ragende Bund des oberen Hülsenabschnitts dar.

Weiter kann das Steckerbuchsengehäuse Ösen zum Ansetzen eines Werkzeugs zum Entnehmen des Sensors mit dem Steckerbuchsengehäuse aufweisen. In diesem Fall kann der obere Endabschnitt der Hülse mit dem Bund vorteilhafterweise auch die Ösen radial nach außen hin abdecken. Ein unerlaubtes Entfernen der Sensoranordnung ist damit praktisch ausgeschlossen.

Für eine kostengünstige Fertigung und leichte Montage kann die Plombe vorzugsweise als einteiliges Kunststoffspritzgießteil ausgebildet sein. Sie kann jedoch selbstverständlich auch aus anderen Werkstoffen bestehen.

Der eingesetzte Kunststoff kann strahlenvernetzt sein und/oder flammhemmende Zusätze und/oder elektromagnetisch abschirmende Füllstoffe aufweisen, um den Impulsgeber nicht nur vor Manipulationen, sondern auch vor äußeren Einflüssen wie Temperatur oder Strahlung zu schützen.

Weitere Vorteile ergeben sich, wenn die Hülse einen oberen Abschnitt und den Mehrkantabschnitt des Schutzgehäuses nach außen hin abdeckt. Dabei kann der obere Abschnitt des Impulsgebers vorzugsweise einen größeren Durchmesser als der Gewindeabschnitt aufweisen und die Hülse der Plombe vorzugsweise das Schutzgehäuse des Impulsgebers bis zum Gewindeabschnitt nach außen hin abdecken. Die Hülse kann dabei zumindest eine Aussparung für das Erkennen von Identifikationsmerkmalen des Impulsgebers aufweisen. Der Absatz zwischen dem Gewindeabschnitt und dem oberen Abschnitt des Impulsgebers bildet eine Anlagefläche, die das Einschrauben des Impulsgebers in das Getriebegehäuse des Fahrzeugs begrenzt. Wenn sich die Hülse ebenfalls bis zu dieser Anschlagsfläche erstreckt, schließt auch die Plombe direkt an das Getriebegehäuse des Fahrzeugs an.

Weiterhin kann vorgesehen sein, dass die Hülse zumindest eine Aussparung für das Erkennen eines Identifikationsmerkmals des zu schützenden Impulsgebers aufweist. Bei der Aussparung kann es sich um ein Sichtfenster oder einen offenen Schlitz handeln. Somit können Identifikationsmerkmale, wie beispielsweise eine Ziffernfolge oder ein QR-Code etc. durch die Plombe hindurch erfasst werden.

Zur Verbesserung des Manipulationsschutzes kann die Hülse zumindest eine Sollbruchstelle aufweisen. Dabei kann die Sollbruchstolle von außen nicht sichtbar sein. Bei einem Manipulationsversuch bricht die Hülse an der Sollbruchstelle, sodass der Manipulationsversuch jederzeit nachgewiesen werden kann.

Die Plombe kann auch eine Signalübertragungseinrichtung, insbesondere eine Sendeeinrichtung, aufweisen. Diese kann z. B. einen Transponder oder einen RFID-Chip, aufweisen. Dadurch kann die Schutzvorrichtung identifiziert werden. Alternativ oder zusätzlich kann eine Signalübertragung stattfinden, wenn Manipulationsversuche oder Manipulationen am Impulsgeber erkannt werden. Manipulationsversuche können z. B. erkannt werden, wenn Schleifen in die Schutzvorrichtung eingebracht, z. B. eingegossen werden und diese verletzt werden.

Nachfolgend wird ein bevorzugtes Ausbildungsbeispiel einer erfindungsgemäßen Plombe mit Bezug auf die Zeichnung näher beschrieben.

Im Einzelnen zeigen:
- Fig. 1: eine perspektivische Ansicht eines Impulsgebers mit teilweise aufgeschnittener Plombe;
- Fig. 2: eine Vorderansicht des Impulsgebers aus Fig. 1 mit einem Längsschnitt durch die Plombe;
- Fig. 3: einen Längsschnitt durch die Plombe aus Fig. 1;
- Fig. 4: eine Vorderansicht des Impulsgebers aus Fig. 1 mit einer zweiten Ausführungsform einer Plombe.

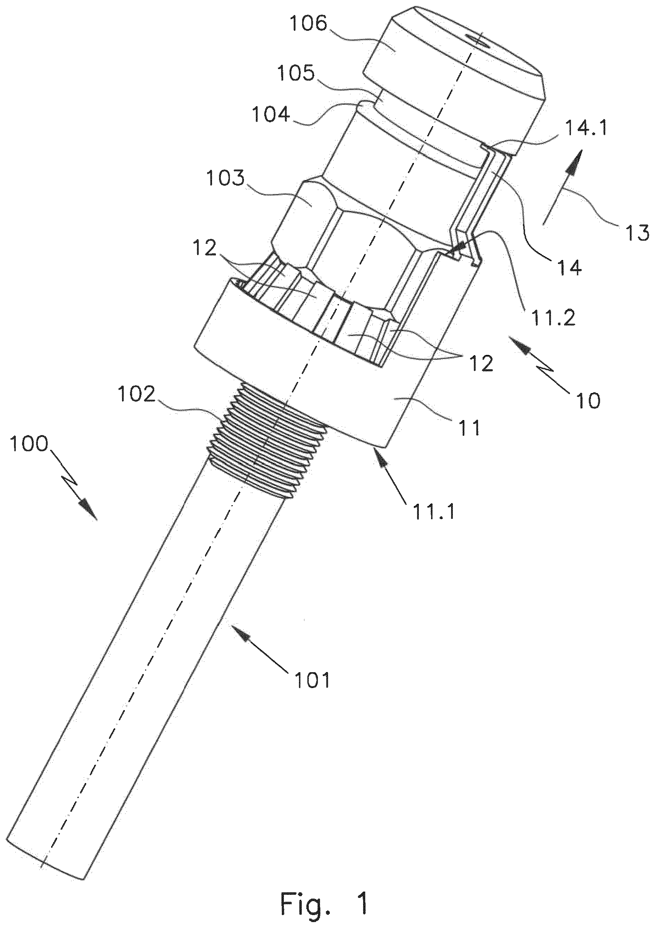

Der in Fig. 1 gezeigte Impulsgeber 100 mit einer Plombe 10 gemäß der Erfindung weist ein zylindrisches Schutzgehäuse 101 für eine hier nicht näher dargestellte Sensoranordnung auf. Das Schutzgehäuse 101 ist mit einem Gewindeabschnitt 102 und einem Mehrkantabschnitt 103, hier ein Sechskantabschnitt, versehen. Am Sechskantabschnitt 103 kann ein Schlüssel angesetzt werden und dadurch das Schutzgehäuse 101 in ein hier nicht dargestelltes Getriebegehäuse eines Fahrzeugs eingeschraubt werden. Am oberen Ende 104 des Schutzgehäuses 101 ragt ein Steckerbuchsengehäuse 105 aus dem Schutzgehäuse 101 heraus, die mit einer kabelseitigen Steckeranordnung 106 verbunden ist.

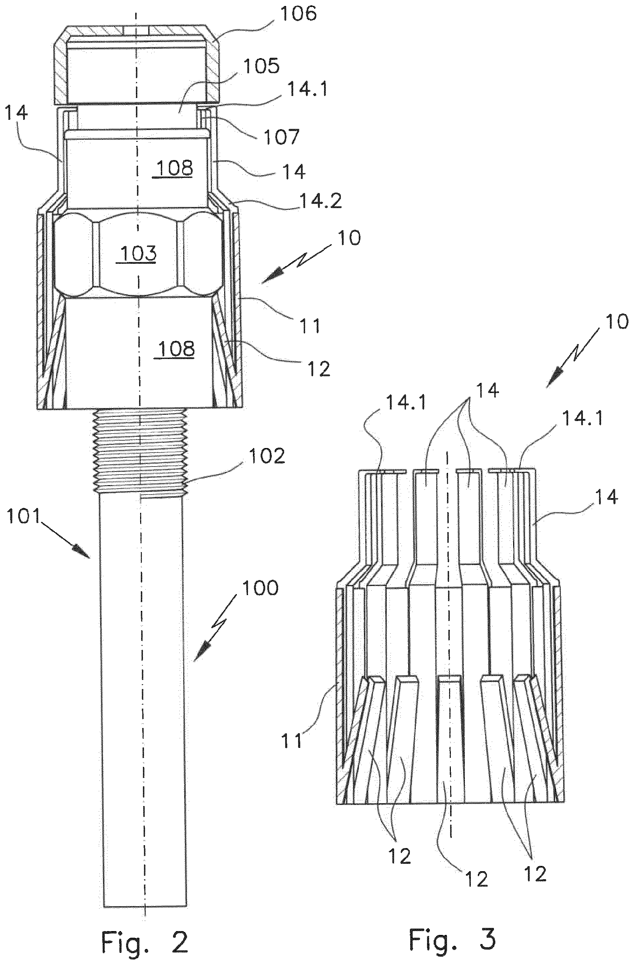

Die teilweise aufgeschnitten gezeigte Plombe 10 weist eine kreiszylindrische Hülse 11 auf, die an ihrem unteren Ende 11.1 mit radial schräg nach innen vorstehenden Rastzungen 12 versehen ist. Insgesamt sind zwölf Rastzungen 12 vorgesehen, die gleichmäßig über den Umfang der Hülse 11 verteilt sind. Die Enden der Rastzungen untergreifen den Mehrkantabschnitt 103 des Impulsgebers 100 und verhindern somit, dass die Hülse 11 in Pfeilrichtung 13 nach oben vom Impulsgeber 100 abgezogen werden kann. Am oberen Ende 11.2 der Hülse 11 sind eine Vielzahl von Federzungen 14, von der in Fig. 1 nur eine dargestellt ist, angeordnet. Die Federzungen 14 weisen radial nach innen abgewinkelte Endabschnitte 14.1 auf. Im Bereich der Federzungen 14 verjüngt sich außerdem der Durchmesser der Plombe 10 auf einen Durchmesser, der kleiner ist als der Minimaldurchmesser des Mehrkantabschnitts 103. Dadurch kann verhindert werden, dass sich die Plombe 10 axial entgegen der Pfeilrichtung 13 auf dem Schutzgehäuse 101 verschiebt. Auch die radial nach innen abgewinkelten Endabschnitte 14.1 der Federzungen 14 verhindern ein solches axiales Verschieben, wie mit Bezug auf Fig. 2 noch näher erläutert wird.

Die Ansicht des Impulsgebers 100 mit der längsgeschnittenen Plombe 10 in Fig. 2 verdeutlicht die Funktion der radial nach innen abgewinkelten Endabschnitte 14.1 der Federzungen 14 der Plombe 10. Sämtliche abgewinkelten Abschnitte 14.1 bilden zusammen einen radial nach innen vorstehenden Bund der Plombe 10, der nach dem Aufsetzen der Plombe 10 auf den Impulsgeber 100, Ösen 107 am Steckerbuchsengehäuse 105 übergreift. An diesen Ösen 107 kann das Steckerbuchsengehäuse zusammen mit der daran befestigten Sensoranordnung des Impulsgebers 100 aus dem Schutzgehäuse 101 herausgezogen werden. Die Federzungen 14 überdecken die Öffnungen der Ösen 107, sodass es unmöglich ist, mit einem Werkzeug an den Ösen 107 anzugreifen und das Steckerbuchsengehäuse 105 mit der Sensoranordnung aus dem

Schutzgehäuse 101 zu entfernen.

Die Federzungen 14 weisen außerdem an ihrer Basis einen abgeschrägten Übergangsbereich 14.2 zur Hülse 11 auf, der nach dem Aufsetzen der Plombe 10 auf dem oberen Rand des Mehrkantabschnitts 103 des Schutzgehäuses 101 aufsitzt und dadurch ebenfalls die Plombe 10 gegen ein axiales Verschieben nach unten sichert.

Fig. 3 verdeutlicht den inneren Aufbau der Plombe 10. Hieraus ist zu erkennen, dass die Rastzungen 12 und die Federzungen 14 in Umfangsrichtung der Plombe 10 versetzt zueinander an der Hülse 11 angeordnet sind. Durch diese Maßnahme lässt sich die Plombe 10 als einteiliges Kunststoffspritzgießteil herstellen und dabei relativ einfach aus der verwendeten Spritzgießform entnehmen.

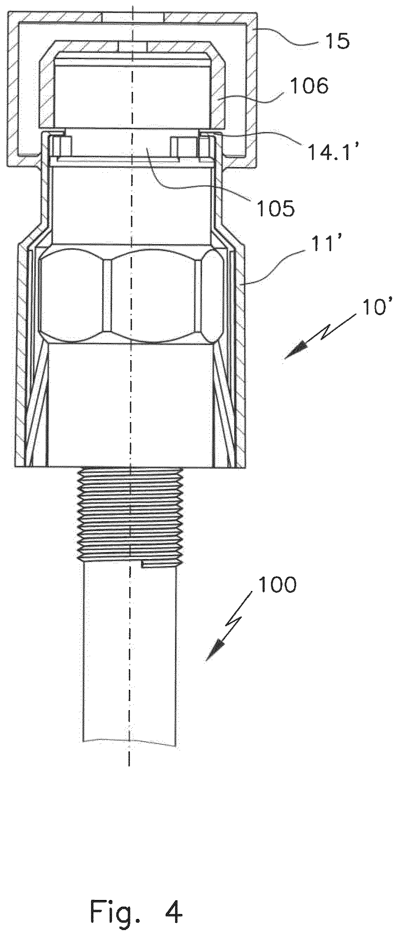

Fig. 4 zeigt den Impulsgeber 100 aus Fig. 1 mit einer zweiten Ausführungsform einer Plombe 10', die eine Hülse 11' aufweist, die sich von der Hülse 11 durch eine Verlängerung 15 unterscheidet, die die in Fig. 2 gezeigte, kabelseitige Steckeranordnung 106 übergreift. Damit schützt die Plombe 11' nicht nur das Steckerbuchsengehäuse 105 mit der Sensoranordnung vor einem nicht autorisierten Herausziehen, sondern auch die kabelseitige Steckeranordnung 106 vor einem unbefugten Abziehen.

## Patentansprüche

1. Plombiervorrichtung für einen Impulsgeber (100), umfassend eine Plombe und ein Schutzgehäuse (101) für eine Sensoreinrichtung des Impulsgebers , wobei das Schutzgehäuse (101) einen Mehrkantabschnitt (103) und einen Gewindeabschnitt (102) zum Einschrauben des Schutzgehäuses in ein Getriebegehäuse eines Fahrzeugs aufweist und wobei am dem Gewindeabschnitt (102) abgewandten Ende (104) des Schutzgehäuses (101) ein Steckerbuchsengehäuse (105) der Sensoreinrichtung aus dem Schutzgehäuse (101) herausragt, **dadurch gekennzeichnet, dass** die Plombe (10, 10') eine auf das Schutzgehäuse (101) mit dem Mehrkantabschnitt (103) aufsetzbare einteilige Hülse (11, 11') aufweist, wobei die Hülse (11, 11') an ihrem dem Gewindeabschnitt (102) zugewandten Ende (11.1) auf ihrer Innenseite mit mehreren, schräg radial nach innen vorstehenden Rastzungen (12) versehen ist, die nach Aufsetzen der Hülse (11, 11') auf das Schutzgehäuse (101) den Mehrkantabschnitt (103) untergreifen, und wobei die Hülse (11) an ihrem gegenüberliegenden Ende mit einem radial nach innen gerichteten Bund (14.1, 14.1') versehen ist, der nach Aufsetzen der Hülse (11, 11') den oberen Rand (104) des Schutzgehäuses (101) übergreift.

2. Plombiervorrichtung nach Anspruch 1, **dadurch gekennzeichnet, dass** der Bund von radial nach innen abgewinkelten Enden (14.1) mehrerer, sich axial erstreckender, den oberen Rand der Hülse bildenden Federzungen (14) gebildet ist.

3. Plombiervorrichtung nach Anspruch 1 und 2, **dadurch gekennzeichnet, dass** die Rastzungen (12) und die Federzungen (14) über den Umfang der Hülse (11) versetzt zueinander angeordnet sind.

4. Plombiervorrichtung nach einem der vorhergehenden Ansprüche, **dadurch gekennzeichnet, dass** die Hülse (11') an ihrem Ende mit dem radial nach innen gerichteten Bund (14.1') eine über das Schutzgehäuse (101) des Sensors hinausragende Verlängerung (15) aufweist, die eine kabelseitige Steckeranordnung (106) übergreift, die mit dem aus dem Schutzgehäuse (101) herausragenden Steckerbuchsengehäuse (105) verbunden ist.

5. Plombiervorrichtung nach einem der vorhergehenden Ansprüche, **dadurch gekennzeichnet, dass** die Hülse (11, 11') einen kreiszylindrischen Innenquerschnitt aufweist und auf dem Schutzgehäuse (101) frei drehbar ist.

6. Plombiervorrichtung nach einem der vorhergehenden Ansprüche, **dadurch gekennzeichnet, dass** ein oberer Abschnitt der Hülse (11, 11') einen geringeren Durchmesser aufweist und dass ein Übergangsbereich (14.2) zwischen dem oberen Abschnitt und einem dem oberen Abschnitt gegenüberliegendem unteren Abschnitt der Hülse (11, 11') auf dem oberen Ringrand des Mehrkantabschnitts (103) aufliegt.

7. Plombiervorrichtung nach einem der vorhergehenden Ansprüche, **dadurch gekennzeichnet, dass** das Steckerbuchsengehäuse Ösen (107) zum Ansetzen eines Werkzeugs zum Entnehmen des Sensors mit dem Steckerbuchsengehäuse aufweist und dass der obere Endabschnitt der Hülse (11, 11') mit dem Bund (14.1, 14.1') die Ösen (107) radial nach außen abdeckt.

8. Plombiervorrichtung nach einem der vorhergehenden Ansprüche, **dadurch gekennzeichnet, dass** sie als Kunststoffspritzgießteil ausgebildet ist.

9. Plombiervorrichtung nach Anspruch 8, **dadurch gekennzeichnet, dass** der Kunststoff strahlenvernetzt ist und/oder flammhemmende Zusätze und/oder elektromagnetisch abschirmende Füllstoffe aufweist.

10. Plombiervorrichtung nach einem der vorhergehenden Ansprüche, **dadurch gekennzeichnet, dass** die Hülse (11, 11') einen Abschnitt (108) und den Mehrkantabschnitt (103) des Schutzgehäuses (101) nach außen hin abdeckt.

11. Plombiervorrichtung nach Anspruch 10, **dadurch gekennzeichnet, dass** der Abschnitt (108) des Impulsgebers (100) einen größeren Durchmesser als der Gewindeabschnitt (102) aufweist und die Hülse (11, 11') der Plombe (10, 10') das Schutzgehäuse (101) des Impulsgebers bis zum Gewindeabschnitt (102) nach außen hin abdeckt.

12. Plombiervorrichtung nach einem der vorhergehenden Ansprüche, **dadurch gekennzeichnet, dass** die Hülse (11, 11') zumindest eine Aussparung für das Erkennen eines Identifikationsmerkmals des zu schützenden Impulsgebers (100) aufweist.

13. Plombiervorrichtung nach einem der vorhergehenden Ansprüche, **dadurch gekennzeichnet, dass** die Hülse (11, 11') zumindest eine Sollbruchstelle aufweist.

14. Plombiervorrichtung nach einem der vorhergehenden Ansprüche, **dadurch gekennzeichnet, dass** sie eine Signalübertragungseinrichtung, insbesondere eine Sendeeinrichtung, aufweist.

## Claims

1. A sealing device for a pulse generator (100), comprising a seal and a protective housing (101) for a sensor means of the pulse generator, the protective housing (101) having a polygonal section (103) and a threaded section (102) for screwing the protective housing into a gearbox of a vehicle, a plug receptacle (105) of the sensor means projecting to the outside from the protective housing (101) at the end (104) of the protective housing (101) facing away from the threaded section (102), **characterized in that** the seal (10, 10') has a one-piece sleeve (11, 11') which can be placed onto the protective housing (101) with the polygonal section (103), the sleeve (11, 11') being provided on its interior at its end (11.1) facing the threaded section (102) with a plurality of locking tongues (12) projecting obliquely radially inwards and engaging under the polygonal section (103) after the sleeve (11, 11') has been fitted onto the protective housing (101), and the sleeve (11) being provided with a radially inwardly directed collar (14.1, 14.1') at its opposite end which engages over the upper edge (104) of the protective housing (101) after the sleeve (11, 11') has been fitted.

2. The sealing device according to claim 1, **characterised in that** the collar is formed by radially inwardly angled ends (14.1) of a plurality of axially extending flexible tongues (14) forming the upper edge of the sleeve.

3. The sealing device according to claims 1 and 2, **characterized in that** the locking tongues (12) and the flexible tongues (14) are arranged offset to each other along the circumference of the sleeve (11).

4. Sealing device according to any one of the preceding claims, **characterized in that** the sleeve (11') has, at its end with the radially inwardly directed collar (14.1'), an extension (15) projecting beyond the protective housing (101) of the sensor and engaging over a cable-side plug arrangement (106) connected to the plug receptacle (105) projecting from the protective housing (101).

5. The sealing device according to any one of the preceding claims, **characterised in that** the sleeve (11, 11') has a cylindrical internal cross-section and is freely rotatable on the protective housing (101).

6. The sealing device according to any one of the preceding claims, **characterized in that** an upper portion of the sleeve (11, 11') has a smaller diameter and that a transition region (14.2) between the upper portion and a lower portion of the sleeve (11, 11') opposite the upper portion rests on the upper annular edge of the polygonal portion (103).

7. The sealing device according to any one of the preceding claims, **characterized in that** the plug receptacle has eyelets (107) for attaching a tool in order to remove the sensor with the plug receptacle and **in that** the upper end portion of the sleeve (11, 11') with the collar (14.1, 14.1') covers the eyelets (107) radially against the outside.

8. The sealing device according to any one of the preceding claims, **characterised in that** it is formed as a resin injection moulded part.

9. The sealing device according to claim 8, **characterized in that** the resin is crosslinked by irradiation and/or includes flame-retardant additives and/or electromagnetically shielding fillers.

10. The sealing device according to any one of the preceding claims, **characterized in that** the sleeve (11, 11') covers a portion (108) and the polygonal portion (103) of the protective housing (101) against the outside.

11. The sealing device according to claim 10, **characterized in that** the portion (108) of the pulse generator (100) has a larger diameter than the threaded section (102) and that the sleeve (11, 11') of the seal (10, 10') covers the protective housing (101) of the pulse generator up to the threaded section (102) against the outside.

12. The sealing device according to any one of the preceding claims, **characterized in that** the sleeve (11, 11') includes at least one recess for recognizing an identification feature of the pulse generator (100) to be protected.

13. The sealing device according to any one of the preceding claims, **characterized in that** the sleeve (11, 11') comprises at least one predetermined breaking point.

14. The sealing device according to any one of the preceding claims, **characterized in that** it comprises a signal transmission means, in particular a transmitter.

## Revendications

1. Dispositif de plombage pour un émetteur d'impulsions (100), comprenant un plomb et un corps de protection (101) destiné à un dispositif de détection de l'émetteur d'impulsions, dans lequel le corps de protection (101) présente une section polygonale (103) et une section filetée (102) permettant un vissage du corps de protection dans un boîtier de transmission d'un véhicule et dans lequel un corps à manchon enfichable (105) du dispositif de détection fait saillie à partir du corps de protection (101) au niveau de l'extrémité (104) du corps de protection (101) qui est opposée à la section filetée (102), **caractérisé en ce que** le plomb (10, 10') présente un manchon monobloc (11, 11') pouvant être mis en place sur le corps de protection (101) avec la section polygonale (103), dans lequel le manchon (11, 11') est muni, sur sa face interne et au niveau de son extrémité (11.1) tournée vers la section filetée (102), de plusieurs languettes de verrouillage (12) faisant saillie de manière radialement inclinée vers l'intérieur et qui viennent en prise sous la section polygonale (103) après la mise en place du manchon (11, 11') sur le corps de protection (101), et dans lequel le manchon (11) est muni au niveau de son extrémité opposée d'une collerette (14.1, 14.1') orientée radialement vers l'intérieur qui vient en prise sur le bord supérieur (104) du corps de protection (101) après la mise en place du manchon (11, 11').

2. Dispositif de plombage selon la revendication 1, **caractérisé en ce que** la collerette est formée des extrémités (14.1), inclinées radialement vers l'intérieur, de plusieurs languettes élastiques (14) s'étendant de manière axiale et formant le bord supérieur du manchon.

3. Dispositif de plombage selon les revendications 1 et 2, **caractérisé en ce que** les languettes de verrouillage (12) et les languettes élastiques (14) sont agencées de manière décalée les unes par rapport aux autres sur la circonférence du manchon (11).

4. Dispositif de plombage selon l'une quelconque des revendications précédentes, **caractérisé en ce que** le manchon (11') présente, au niveau de son extrémité munie de la collerette (14.1') orientée radialement vers l'intérieur, une extension (15) qui fait saillie au-delà du corps de protection (101) du capteur et vient en prise sur un agencement formant fiche (106) situé du côté câble et relié au corps à manchon enfichable (105) faisant saillie à partir du corps de protection (101).

5. Dispositif de plombage selon l'une quelconque des revendications précédentes, **caractérisé en ce que** le manchon (11, 11') présente une section intérieure cylindrique circulaire et peut tourner librement sur le corps de protection (101).

6. Dispositif de plombage selon l'une quelconque des revendications précédentes, **caractérisé en ce qu'**une section supérieure du manchon (11, 11') présente un diamètre inférieur et **en ce qu'**une région de transition (14.2) repose sur le bord annulaire supérieur de la section polygonale (103) entre la section supérieure et une section inférieure du manchon (11, 11') opposée à la section supérieure.

7. Dispositif de plombage selon l'une quelconque des revendications précédentes, **caractérisé en ce que** le corps à manchon enfichable présente des œillets (107) permettant la fixation d'un outil permettant de retirer le capteur avec le corps à manchon enfichable et **en ce que** la section d'extrémité supérieure du manchon (11, 11') munie de la collerette (14.1, 14.1') recouvre les œillets (107) de manière radiale vers l'extérieur.

8. Dispositif de plombage selon l'une quelconque des revendications précédentes, **caractérisé en ce qu'**il est réalisé sous forme de pièce en matière plastique moulée par injection.

9. Dispositif de plombage selon la revendication 8, **caractérisé en ce que** la matière plastique est réticulée par rayonnement et/ou présente des additifs ignifuges et/ou des charges de protection électromagnétique.

10. Dispositif de plombage selon l'une quelconque des revendications précédentes, **caractérisé en ce que** le manchon (11, 11') recouvre une section (108) et la section polygonale (103) du corps de protection (101) vers l'extérieur.

11. Dispositif de plombage selon la revendication 10, **caractérisé en ce que** la section (108) de l'émetteur d'impulsions (100) présente un diamètre supérieur à celui de la section filetée (102) et le manchon (11, 11') du plomb (10, 10') recouvre vers l'extérieur le corps de protection (101)) de l'émetteur d'impulsions jusqu'à la section filetée (102).

12. Dispositif de plombage selon l'une quelconque des revendications précédentes, **caractérisé en ce que** le manchon (11, 11') présente au moins un évidement destiné à la reconnaissance d'une caractéristique d'identification de l'émetteur d'impulsions (100) à protéger.

13. Dispositif de plombage selon l'une quelconque des revendications précédentes, **caractérisé en ce que** le manchon (11, 11') présente au moins un point de rupture prédéterminé.

14. Dispositif de plombage selon l'une quelconque des revendications précédentes, **caractérisé en ce qu'**il présente un dispositif de transmission de signaux, en particulier un dispositif d'émission.
